# EUROPÄISCHE PATENTSCHRIFT

(11) **EP 1 264 308 B1**
(45) Veröffentlichungstag und Bekanntmachung des Hinweises auf die Patenterteilung: **10.09.2003**
(21) Anmeldenummer: 01909786.4
(22) Anmeldetag: 21.02.2001
(51) Int. Cl.: G11B 7/26, B65G 25/02

(54) **VERFAHREN UND VORRICHTUNG ZUM HERSTELLEN EINER DVD**
METHOD AND DEVICE FOR PRODUCING A DVD
PROCEDE ET DISPOSITIF POUR PRODUIRE UN DVD

(30) Priorität: 22.02.2000 DE 10008109
(43) Veröffentlichungstag der Anmeldung: 11.12.2002
(73) Patentinhaber: Krauss-Maffei Kunststofftechnik GmbH, 80997 München (DE)
(72) Erfinder: EICHLSEDER, Martin, 94167 Tettenweis (DE)
(74) Vertreter: Zollner, Richard
(86) Internationale Anmeldenummer: EP0101978
(87) Internationale Veröffentlichungsnummer: WO01063605

(56) Entgegenhaltungen:
- WO-A-99/24976
- DE-A- 19 907 210
- US-A- 5 913 652

## Beschreibung

Die Erfindung betrifft ein Verfahren zum Herstellen einer DVD gemäß dem Oberbegriff von Patentanspruch 1 sowie eine Vorrichtung zur Durchführung des Verfahrens gemäß dem Oberbegriff von Patentanspruch 11.

Bei der Herstellung einer DVD werden zunächst von zwei Spritzaggregaten A und B die später zu verklebenden DVD-Substrate A und B in einem Spritzgießvorgang hergestellt. Anschließend werden diese Substrate gekühlt, zu einer oder mehreren Metallisierungstationen und danach zu der eigentlichen Bondingstation transportiert, die im wesentlichen eine Kleberauftragsstation und eine Fügestation umfasst. In der Kleberauftragsstation werden üblicherweise Klebstoffe vom Typ Hotmelt oder ein flüssiger, UV-aushärtender Klebstoff verwendet. Der Hotmelt-Klebstoff wird mittels eines mit einem Rakel ausgestatteten Walzensystem aufgetragen, wobei die Substrate A und B nebeneinanderliegend unter dem Rakel hindurchbewegt werden. Der UV-aushärtende Klebstoff wird mittels einer Dosiemadel auf eine oder beide Substrate aufgetragen. In der Fügestation werden die DVD-Substrate A und B zusammengefügt und der Klebstoff zur Aushärtung gebracht, wobei bei dem UV-aushärtenden Klebstoff zusätzlich die Anwendung von UV-Strahlung erforderlich ist. Für den Transport der DVD-Substrate A und B von den Spritzgießmaschinen durch die gesamte Produktionsstrecke bis zur fertig gebondeten DVD werden die Substrate auf Transporteinrichtungen wie beispielsweise Transportbändern, Spindeln, oder einem sogenannten "walking-beam" bewegt und mit Handlingsystemen von den Transporteinrichtungen abgehoben und umgesetzt (sogenanntes Pick and Place).

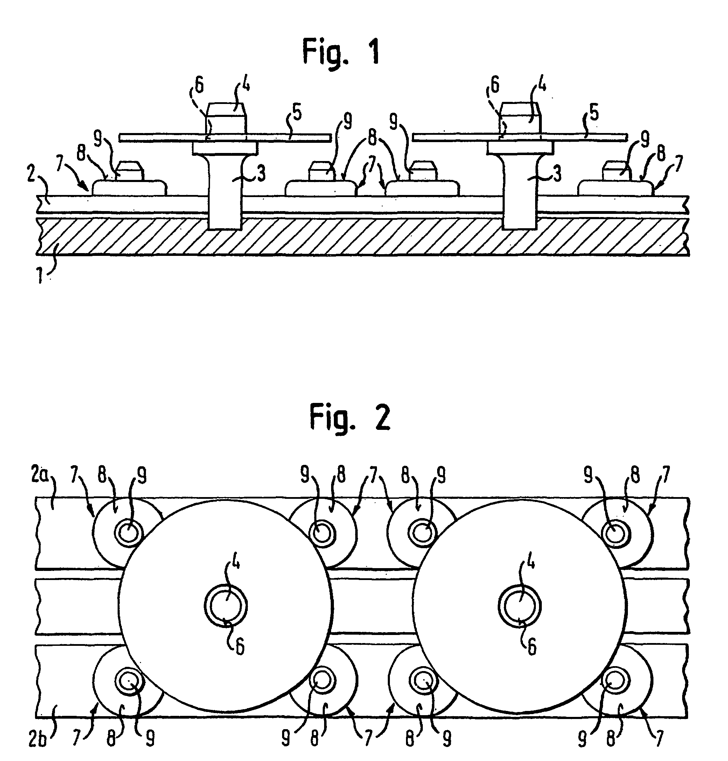

Ein "walking beam" - Transportsystem ist in den Fig.1 und Fig.2 ausschnittsweise in Seitenansicht und in Draufsicht gezeigt. Ein komplettes Walking-Beam-Transportsystem besteht aus einer geeigneten Anzahl von Einheiten der in Fig.1 bzw. 2 dargestellten Art. Die genaue Anzahl richtet sich nach der Länge der Transportstrecke. Dieses Transportsystem besteht aus einem horizontal feststehenden und vertikal bewegbaren Transportbalken 1 (sogenannter "Beam") und einem koaxial zu diesem Transportbalken angeordneten und in Längsrichtung bewegbaren Transportrahmen 2 (sogenannter "Walk"). Dieser weist im wesentlichen zwei balkenartige Elemente 2a und 2b auf, die in Aufsicht (siehe Fig.2) links und rechts des Transportbalkens 1 angeordnet sind. Auf den balkenartigen Elementen 2a und 2b sind Halteelemente 7 angeordnet, die jeweils über eine Auflagefläche 8 für das DVD-Substrat 5 und seitliche Fixierpins 9 verfügen. Durch die Teilschnittdarstellung in Fig.1 ist dort nur das hintere (linke oder rechte) Element des Transportrahmens 2 dargestellt Der Transportbalken 1 ist mit einer Reihe von im wesentlichen zylinderförmigen, mit Zentrierpins 4 ausgestatteten Trägem 3 bestückt, auf denen die DVD-Substrate 5 abgelegt werden, wobei jeweils der Zentrierpin 4 die zentrische Ausnehmung 6 in dem DVD-Substrat durchstößt. Zum Transportieren werden durch eine Abwärtsbewegung des Transportbalkens 1 zunächst die auf den Trägern 3 aufliegenden DVD-Substrate 5 auf den Auflageflächen 8 der Halteelemente 7 des Transportrahmens 2 abgelegt und nachfolgend die Zentrierpins 4 nach unten aus den zentrischen Ausnehmungen 6 der DVD-Substrate 5 herausgefahren. Der Transportrahmen 2 wird nun in der Regel eine Station in Längsrichtung bewegt, bis die Reihe von DVD-Substraten 5 so über dem Transportbalken 1 positioniert sind, daß sich die zentrischen Ausnehmungen 6 der DVD-Substrate 5 wieder genau über dem in der Regel benachbarten Träger 3 und dessen Zentrierpin 4 befinden. Durch eine Aufwärtsbewegung des Transportbalkens 1 greifen die Zentrierpins 4 in die Ausnehmungen 6 der DVD-Substrate 5 und der Transportbalken 1 mit den Trägem 3 hebt diese vom Transportrahmen 2 ab. Der Transportrahmen (Walk) wird nun in die entgegengesetzte Richtung in seine Ausgangsposition zurückbewegt und der Zyklus beginnt von neuem, d.h. der Transportbalken (Beam) beginnt mit der nächsten Abwärtsbewegung und so fort.

Bei der Herstellung von DVD's werden die von dem Spritzaggregat A hergestellten Substrate A auf einer ersten und die von dem Spritzaggregat B hergestellten Substrate B auf einer zweiten Transportvorrichtung der zuvor genannten Art abgelegt und separat, in der Regel parallel zueinander, bis zu den und durch die nachfolgenden Bearbeitungsstationen hindurchtransportiert, bis an der Fügestation von der A-Transporteinrichtung ein A-Substrat und von der B-Transporteinrichtung ein B-Substrat mit einem Handlingsystem ergriffen und in der richtigen Reihenfolge in der Fügestation abgelegt werden (US 5,961,777). Durch den getrennten, parallelen Transport von A-Substrat und 8-Substrat bis zur Fügestation wird sichergestellt, dass stets ein A-Substrat mit einem B-Substrat zusammengefügt wird.

Andererseits besitzt ein derartiges Herstellungsverfahren mehrere Nachteile. Zum einen beansprucht ein doppeltes Transportsystem entsprechend viel Raum. Ausserdem müssen die Transporteinrichtungen im Betrieb so aufeinander abgestimmt sein, daß an der Fügestation jeweils ein A-Substrat und ein B-Substrat im richtigen Produktionszyklus, gegebenenfalls zeitgleich, bereitgestellt werden. Dies erfordert einen entsprechenden Aufwand an Steuerungselektronik und Software, damit die mechanischen Teile im richtigen Produktionszyklus zusammenwirken. Für die Metallisierung von A-Substrat und B-Substrat müssen femer separate Beschichtungseinrichtungen vorgesehen werden. Im Falle eines Hotmelt-Klebstoffauftrags ist das Walzensystem so breit auszulegen, daß das A-Substrat und das B-Substrat gleichzeitig mit Hotmelt-Klebstoff belegt werden können. Dabei kommt es zu einer geringfügigen Durchbiegung des Rakels, mit dem der Klebstoff auf die nebeneinanderliegenden Substrate A und B aufgetragen wird. Dies hat zur Folge, daß der Klebstoffauftrag mit einem ungleichmässigen Druck auf die Substrate erfolgt; in der Mitte des Rakels.ist der Druck höher als an dessen Rändern, so daß die Substrate ungleichmässig mit Kleber beschichtet werden. Infolgedessen kommt es beim Bonden der Substrate zur Ausbildung von Unwuchten. Schließlich müssen auch für jede Transportlinie getrennte Handlingsysteme (Pick&Place) vorgesehen werden, also praktisch die doppelte Anzahl von Pick&Place.

Der Erfindung liegt nunmehr die Aufgabe zugrunde, ein Verfahren und eine Vorrichtung zum Herstellen einer DVD anzugeben, bei dem automatisch und ohne aufwendige Zusatzmaßnahmen in der Steuerungselektronik und in der Software sichergestellt ist, daß beide Substrate A und B stets im richtigen Produktionszyklus und darüberhinaus zeitgleich fertig zum Bonden an der Fügestation bereitgestellt werden.

Zur Lösung dieser Aufgabe wird ein verfahren und Anspruch 1 und eine Vorrichtung nach Anspruch 11, vorgeschlagen, wobei zum Transportieren der DVD-Substrate A und B ein oder mehrere walking-beam vorgesehen sind, wobei die A-Scheibe und die B-Scheibe abwechselnd in einer Reihe hintereinander auf dem oder den walking-beam liegen (A-B-A-B-A-B-...) und wobei der oder die walking-beam in einem Zweierschritt betrieben wird/werden. Die Substrate A und B durchlaufen somit in der "richtigen" Reihenfolge A-B-A-B-A-B-... den gesamten Herstellungsprozess. Da der walking beam im Zweierschritt bewegt wird, befinden sich die A-Substrate stets an der einen gleichen Position, während sich die B-Substrate stets an der anderen gleichen Position befinden, was eine Titelverfolgung ohne Sensorik und Software-Aufwand erlaubt. Würde man hingegen mit einem walking beam im Einerschritt die DVD-Substrate A und B hintereinander transportieren, würde sich die Titelverfolgung wesentlich schwieriger gestalten, da an derselben Position einmal das A-Substrat und einmal das B-Substrat liegt, und an der Übergabestelle zur Fügestation wären weitere Massnahmen zu ergreifen, damit sichergestellt ist, daß stets ein A-Substrat mit einem B-Substrat richtig zusammengefügt wird.

Die Verwendung eines im Zweierschritt betriebenen walking beam bietet darüberhinaus den Vorteil, daß anstelle von zwei separaten Metallisierern ein Kombisputter eingesetzt werden kann, der über zwei Sputterquellen verfügt, um gleichzeitig die zu metallisierenden Substrate A und B beschichten können. Um den Kombisputter in kürzester Zeit mit Substraten A und B bedienen zu können, ist gemäß den Unteransprüchen 3 und 14 vorgesehen, daß zwei Tandemgreifer vorgesehen sind, die derart zusammenwirken, daß mit dem ersten Taridemgreifer ein Paar, bestehend aus einem A-Substrat und einem B-Sustrat, von dem walking beam abgehoben und in den Kombisputter eingelegt wird, während zeitgleich mit dem zweiten Tandemgreifer das zuvor fertig gesputterte Paar von A-Substrat und B-Substrat entnommen und auf den nunmehr freien Plätzen des walking beam abgelegt wird, wobei die Reihenfolge auf dem walking beam, nämlich A-B-A-B-A-B... erhalten bleibt.

Bei Verwendung eines Klebstoffs vom Typ Hotmelt ergibt sich als weiterer Vorteil, daß die Substrate in einer Reihe hintereinanderliegend unter dem Rakel für den Kleberauftrag hindurchbewegt werden, so daß das Rakel im Vergleich zum Stand der Technik um etwa die Hälfte kürzer ausgelegt werden kann, was den Grad der Durchbiegung deutlich reduziert und schon allein aus diesm Grund der Kleberauftrag gleichmässiger erfolgt. Ausserdem durchlaufen sowohl die A-Substrate als auch die B-Substrate das Walzensystem der Kleberauftragsstation stets an derselben Stelle, so daß sich auch das Auftragsmuster von A-Substrat und von B-Substrat im Gegensatz zum Stand der Technik nicht unterscheidet. Für die Zufuhr der Substrate A und B zu dem Walzensystem der Kleberauftragsstation können diese mit einem Tandemgreifer gleichzeitig von dem walking beam erfasst und auf das Transportband umgesetzt werden oder mit dem beam des walking beam ohne zusätzliches Handling direkt auf das Transportband aufgelegt werden, was einen Zeitvorteil gegenüber dem Hintereinanderablegen bedeutet. Nach Verlassen der Kleberauftragsstation liegen die mit Hotmelt-Klebstoff belegten Substrate A und B immer noch in der Reihenfolge A-B-A-B-A-B... vor, so daß anschließend von einem Tandemgreifer gleichzeitig ein A-Substrat und ein B-Substrat erfasst und beide in die Fügestation umgesetzt werden können. In weiterer vorteilhafter Ausgestaltung weist die Fügestation zwei zusammenklappbare Hälften auf, die in zusammengeklapptem Zustand eine Vakuumkammer bilden, wobei zusätzlich in der unteren Hälfte der Träger für die untere Scheibe als Kolben ausgebildet ist und zum Verpressen der Substrate mit Druckluft beaufschlagt werden kann. Es findet also eine Kombination aus Vakuumfügen und Verpressen in einer Station statt.

Mit der vorliegenden Erfindung spart man sich im Gegensatz zum Stand der Technik ausserdem das getrennte Greifen eines A-Subtrats von der ersten und eines B-Substrats von der zweiten Transporteinrichtung, wobei zusätzlich darauf geachtet werden muß, daß diese in der richtigen Reihenfolge in der Bondingstation abgelegt werden. Da nur eine Transporteinrichtung verwendet wird, kommt man mit weniger Handling- und Umsetzstationen aus, insbesondere wenn nur ein walking beam eingesetzt wird.

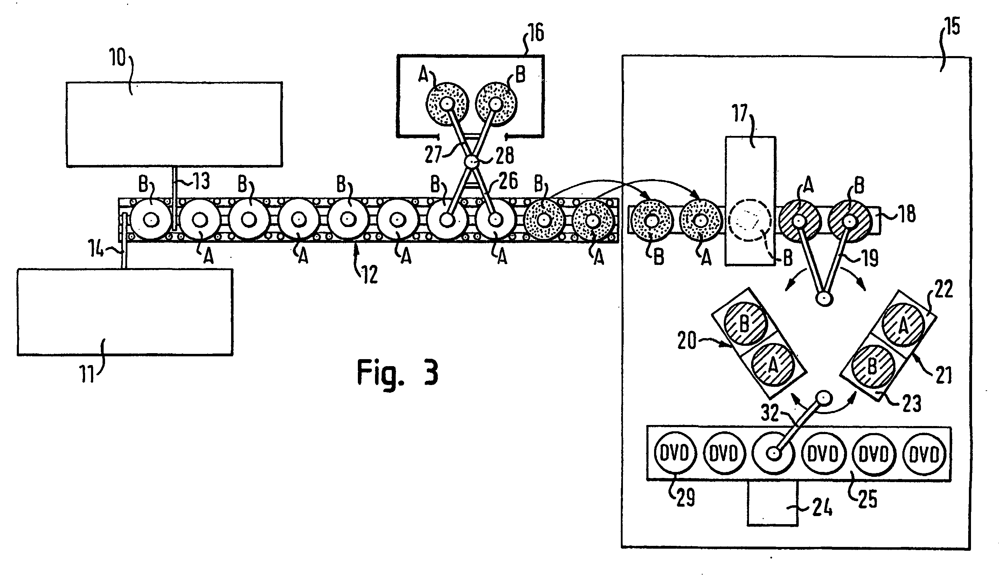

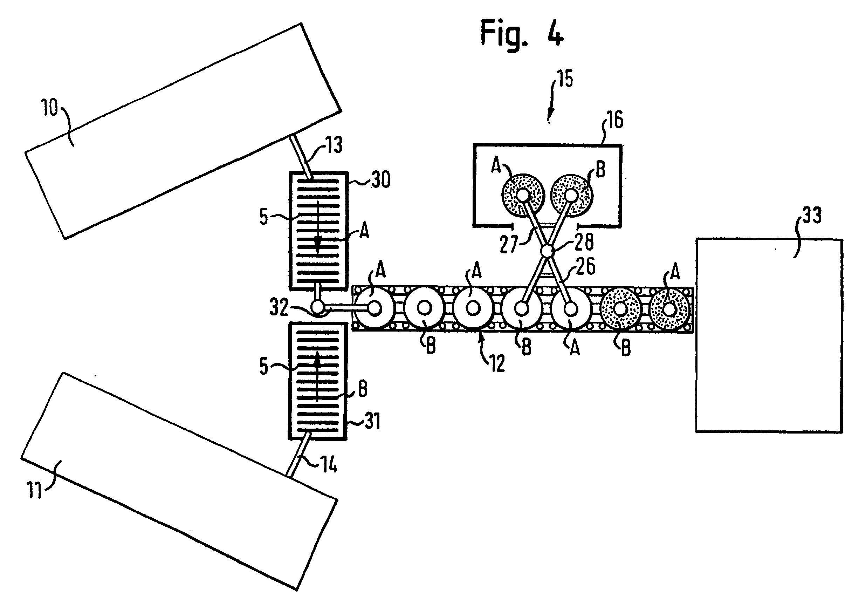

Nachfolgend soll die Erfindung anhand von Ausführungsbeispielen und unter Bezugnahme auf die Figuren 3 und 4 näher erläutert werden.

Figur 3 zeigt schematisch eine erfindungsgemäße Vorrichtung vom Typ Hotmelt-Bonder. Zwei Spritzaggregate 10 und 11 sind seitlich von einem walking-beam 12 versetzt zueinander angeordnet, wobei der Versatz gerade einem Schritt des walking-beam entspricht. Mittels Übergabeeinrichtungen 13 und 14 werden die DVD-Substrate A und B örtlich hintereinander, aber zeitgleich, auf dem walking-beam 12 auf den Trägern abgelegt. Durch Ausführung eines Zweierschritts werden die gerade abgelegten Substrate A und B um zwei Schritte in Richtung der Bondingstation 15 weiterbewegt. Nach Zurückbewegen des Transportrahmens des walking-beam kann dieser erneut zwei Substrate A und B in dieser Reihenfolge aufnehmen und um zwei Schritte in Richtung der Bondingstation weiterbewegen. Auf dem walking-beam 12 liegen die Substrate A und B also jeweils hintereinander und bilden eine Reihe A-B-A-B-A-B-A-B-usw. Während des Transports werden die DVD-Substrate gleichzeitig gekühlt, passiv durch Umgebungsluft oder aktiv durch Frischluftzufuhr. In der Metallisierungsstation 16 ist ein Kombisputter mit zwei Sputterquellen vorgesehen. Zwei Tandemgreifer 26 und 27 sind um eine senkrechte Achse 28 drehbar und greifen jeweils ein Paar, bestehend aus einem Substrat A und einem Substrat B. Der erste Tandemgreifer 26 ergreift ein noch unbeschichtetes Paar A und B von dem walking beam 12, während gleichzeitig der zweite Tandemgreifer 27 das gerade beschichtete Paar A und B in dem Kombisputter 16 ergreift (wobei je nach DVD-Typ nur ein Substrat oder beide Substrate beschichtet werden, in der Regel mit einer Aluminium- oder einer Goldschicht). Durch Drehung der beiden Tandemgreifer 26, 27 um die Achse 28 werden die noch unbeschichteten Substrate A und B von dem ersten Tandemgreifer 26 in den Kombisputter 16 übergeben, während der zweite Tandemgreifer 27 die gerade beschichteten Substrate A und B (gepunktet dargestellt) zum walking beam 12 transportiert und dort auf die nunmehr freigewordenen Plätze absetzt, und zwar automatisch in der richtigen Reihenfolge. Der walk (Transportrahmen) 2 reicht zwei Stationen über das Transportband 18 und der beam (Transportbalken) 1 hebt das A-Substrat und das B-Substrat hoch; der walk fährt dann zwei Stationen zurück und der beam 1 fährt nach unten, wobei die Substrate A und B auf dem Transportband 18 der Kleberauftragsstation 17 aufgelegt werden. Damit wird ein Handling in der Art eines sogenannten Pick and Place eingespart. Anchließend werden die Substrate A und B hintereinanderliegend durch das Walzensystem der Hotmelt- Kleberauftragsstation hindurchbewegt, wobei mit einem vergleichsweise kurzen Rakel der Klebstoff auf die Substrate gerollt wird. Nach Verlassen der Kleberauftragsstation 17 werden die mit Kleber belegten Substrate A und B von einem weiteren Tandemgreifer 19 gleichzeitig und lagerichtig erfasst und gleichzeitig in eine der Fügestationen 20 oder 21 abgesetzt, wobei die Substrate A und B symmetrisch gehandelt werden. Die Fügestationen bestehen aus zwei zusammenklappbaren Hälften 22 und 23; in die eine Hälfte wird das A-Substrat und in die andere Hälfte das B-Substrat abgelegt. Die Substrate werden in den Hälften in geeigneter Weise fixiert und zentriert, z.B. auf Vakuumteller und mit Zentrierpins. Wenn die Hälften zusammengeklappt sind, bilden sie eine Kammer, die evakuiert wird. Unter Einfluß des Vakuums werden die beiden Substrate A und B zueinander angezogen und verkleben. Zusätzlich wird zum Verpressen von oben und/oder unten Druck ausgeübt. Vorzugsweise wird hierzu der Substratträger des unteren Substrats mittels Druckluft nach oben gedrückt. Hierzu kann dieser Substratträger an eine Kolben-Zylinder-Einheit angebracht sein oder der Substratträger selbst ist als Kolben in der unteren Hälfte der Fügestation bewegbar und kann direkt mit Druckluft beaufschlagt werden, so daß im Ergebnis ein Zweikammemsystem gebildet wird, nämlich eine evakuierbare Unterdruckkammer zwischen den Substraten A und B und eine mit Druckluft befüllbare Überdruckkammer unterhalb des Kolbens. Nach Abschluß des Fügeprozesses wird die Vakuumkammer geöffnet und die fertige DVD kann entnommen, in einem Scanner 24 kontrolliert und schließlich, wenn sie für gut befunden ist, auf Gutteil-Spindeln 29 abgelegt werden. Die Stapelspindeln 29 sind auf einem Rundttakttisch oder - wie hier dargestellt - auf einem Lineartransport 25 in walking-beam-Ausführung angeordnet. Ein derartiger Lineartransport 25 kann im Vergleich zu einem Rundtakttisch leichter eine größere Anzahl von Stapelspindeln 29 aufnehmen, so daß auf jeder Stapelspindel 29 bedarfsweise eine geringere Anzahl von DVD's abgelegt werden kann, wenn die Druckbelastung für die untersten DVD's reduziert werden soll.

Figur 4 zeigt schematisch eine erfindungsgemäße Vorrichtung vom Typ UV-Kleber. Die Spritzaggregate 10 und 11 für das A- und das B-Substrat sind schräg zu einer DVD-Bondingstation 15 mit integriertem Kombisputter 16 angeordnet. Die spritzgegossenen Substrate A und B werden von den Übergabeeinrichtungen 13 und 14 vertikal in Spindelkühler 30 und 31 abgelegt. Durch Rotation der einzelnen Spindeln werden die Substrate 5 in vertikaler Position in Richtung des walking beam 12 bewegt (siehe Pfeil) und dabei mit Kühlluft beaufschlagt. Mittels eines Pick&Place 32 wird von dem Spindelkühler 30 ein A-Substrat und von dem Spindelkühler 31 ein B-Substrat entnommen und hintereinander auf dem walking beam 12 abgelegt, so daß die Substrate auf dem walking beam in einer Reihe A-B-A-B-A-B-... hintereinanderliegen. An der Metallisierungsstation 16 ist ein Kombisputter vorgesehen, der von zwei Tandemgreifem 26 und 27 in der gleichen Weise bestückt und entleert wird wie dies bei dem oben im Zusammenhang mit Figur 3 beschriebenen Hotmelt-Typ-Bonder erläutert ist. Nach dem Beschichten werden die Substrate in der Reihenfolge A-B-A-B-A-B... weitertransportiert bis zu der UV-Kleberstation 33, wo in an sich bekannter Art und Weise auf ein oder beide Substrate ein UV-aushärtender Kleber aufgetragen wird, anschließend die Substrate A und B zusammengefügt werden, der UV-Kleber abgeschleudert wird und die gebondete DVD unter eine UV-Lampe getaktet wird, wo der UV-Kleber aushärten kann.

### Bezugszeichenliste

- 1: Transportbalken
- 2: Transportrahmen
- 2a,2b: balkenförmige Seitenteile des Transportrahmens
- 3: Träger
- 4: Zentrierpin
- 5: DVD-Substrat
- 6: zentrische Ausnehmung im DVD-Substrat
- 7: Halteelemente
- 8: Auflagefläche
- 9: Fixierpin
- 10: Spritzaggregat für A-Substrat
- 11: Spritzaggreagt für B-Substrat
- 12: Walking-Beam
- 13: Übergabeeinrichtung für A-Substrat
- 14: Übergabeeinrichtung für B-Substrat
- 15: Bondingstation
- 16: Metallisierungsstation (Kombisputter)
- 17: Kleberauftragsstation
- 18: Transportband
- 19: Tandemgreifer an Fügestation
- 20: Erste Fügestation
- 21: Zweite Fügestation
- 22: Erste Hälfte einer Fügestation
- 23: Zweite Hälfte einer Fügestation
- 24: Scanner zur Qualitätskontrolle
- 25: Lineartransport in walking beam Ausführung
- 26: Erster Tandemgreifer an Metallisierungsstation
- 27: Zweiter Tandemgreifer an Metallisierungsstation
- 28: Drehachse der Tandemgreifer 26 und 27
- 29: Stapelspindeln
- 30: Spindelkühler für A-Substrat
- 31: Spindelkühler für B-Substrat
- 32: Pick&Place
- 33: UV-Klebestation

## Patentansprüche

1. Verfahren zum Herstellen einer DVD aus zwei DVD-Substraten A und B, wobei mit einem ersten Spritzaggreagat A das erste Substrat (A-Scheibe) und mit einem zweiten Spritzaggregat B das zweite Substrat (B-Scheibe) der DVD hergestellt werden, wobei in einer Beschichtungsstation ein oder beide DVD-Substrate beschichtet, insbesondere metallisiert werden, wobei in einer Kleberauftragsstation ein oder beide DVD-Substrate mit einem Klebstoff versehen werden und wobei die DVD-Substrate A und B wenigstens einer Fügestation zum Verbinden von A-Scheibe und B-Scheibe zu einer DVD zugeführt werden,
**dadurch gekennzeichnet,**
**daß** zum Transportieren der DVD-Substrate A und B ein oder mehrere walking-beam (12) vorgesehen sind, daß die A-Scheibe und die B-Scheibe abwechselnd in einer Reihe hintereinander auf dem oder den walking-beam (12) liegen (A-B-A-B-A-B-...) und daß der oder die walking-beam in einem Zweierschritt betrieben wird/werden.

2. Verfahren nach Anspruch 1, **dadurch gekennzeichnet,**
**daß** an der Beschichtungsstation (16) gleichzeitig eine A-Scheibe und eine B-Scheibe von dem walking beam (12) entnommen wird, und daß die Substrate A und B nach dem Beschichten auf demselben oder einem weiteren walking beam (12) in Transportrichtung gesehen hintereinander abgelegt werden.

3. Verfahren nach Anspruch 1 oder 2, **dadurch gekennzeichnet,**
**dass** an der Beschichtungsstation (16) zwei Tandemgreifer (26, 27) vorgesehen sind, daß mit dem ersten Tandemgreifer (26) ein Paar, bestehend aus einem A-Substrat und einem B-Substrat, von dem walking beam (12) entnommen und in einen Sputter eingelegt wird, und dass mit dem zweiten Tandemgreifer (27) das zuvor fertig gesputterte Paar von A-Substrat und B-Substrat entnommen und auf den zuvor freigewordenen Plätzen des walking beam (12) abgelegt wird (zwei in, zwei out).

4. Verfahren nach einem der Ansprüche 1 bis 3, **dadurch gekennzeichnet,**
**dass** zum Verkleben der DVD-Substrate (5) ein mittels eines Walzensystems auftragbarer Hot-Melt-Kleber vorgesehen ist, daß die Substrate A und B von dem walking beam (12) in der ankommenden Reihenfolge A-B-A-B-A-B... auf ein durch das Walzensystem laufendes Transportband (18) übergeben werden und in dieser Reihenfolge das Walzensystem durchlaufen.

5. Verfahren nach einem der Ansprüche 1 bis 4, **dadurch gekennzeichnet,**
**dass** die mit Kleber belegten Substrate A und B gleichzeitig von einem Tandemgreifer (19) erfasst, gleichzeitig zu einer Fügestation (20, 21) bewegt und gleichzeitig dort abgelegt werden.

6. Verfahren nach einem der Ansprüche 1 bis 5, **dadurch gekennzeichnet,**
**dass** die mit Kleber belegten Substrate A und B in einer Fügestation (20, 21) abgelegt werden, die aus zwei zusammenklappbaren Hälften (22, 23) besteht, wobei in der einen Hälfte die A-Scheibe und in der anderen Hälfte die B-Scheibe abgelegt wird, wobei das Ablegen gleichzeitig erfolgt, und wobei nach dem Zusammenklappen der Hälften das Verbinden der beiden Substrate A und B erfolgt.

7. Verfahren nach Anspruch 6, **dadurch gekennzeichnet,**
**dass** nach dem Zusammenklappen der Hälften der Fügestation (20, 21) diese eine Kammer bilden und diese Kammer evakuiert wird.

8. Verfahren nach Anspruch 6 oder 7, **dadurch gekennzeichnet,**
**dass** die untere Scheibe auf einem in der Kammer verschiebbaren Kolben aufliegt und der Kolben von unten mit Druck, insbesondere mit Druckluft, beaufschlagt wird.

9. Verfahren nach einem der Ansprüche 1 bis 8, **dadurch gekennzeichnet,**
**dass** die Spritzaggregate A und B (10, 11) zu beiden Seiten eines ersten walking-beam (12) und in Transportrichtung derart zueinander versetzt angeordnet werden, dass die jeweiligen Substrate A und B unmittelbar an den ersten walking-beam (12) übergeben und in Transportrichtung hintereinander und zeitgleich abgelegt werden können.

10. Verfahren nach einem der Ansprüche 1 bis 9, **dadurch gekennzeichnet,**
**dass** die DVD-Substrate A und B nach ihrer Entnahme aus den Spritzaggregaten A und B (10, 11) mit Kühlluft beaufschlagt werden, beispielsweise in einem Spindelkühler (30, 31) oder während des Transports auf dem ersten walking beam (12).

11. Vorrichtung zum Herstellen einer DVD, insbesondere zur Durchführung des Verfahrens nach einem der Ansprüche 1 bis 10, mit zwei Spritzaggregaten A und B für die Herstellung der DVD-Substrate, wobei mit dem ersten Spritzaggreagat A das erste Substrat (A-Scheibe) und mit dem zweiten Spritzaggregat B das zweite-Substrat (B-Scheibe) einer DVD hergestellt werden, mit einer Beschichtungseinrichtung zum Beschichten, insbesondere zum Metallisieren der DVD-Substrate, mit einer Kleberauftragsstation, mit wenigstens einer Fügestation zum Verbinden von A-Scheibe und B-Scheibe, sowie mit Mitteln zum Transportieren der DVD-Substrate und der fertigen DVD's,
**dadurch gekennzeichnet,**
**daß** zum Transportieren der DVD-Substrate A und B ein oder mehrere walking-beam (12) vorgesehen sind, wobei die A-Scheibe und die B-Scheibe abwechselnd in einer Reihe hintereinander auf dem oder den walking-beam (12) liegen (A-B-A-B-A-B-...) und wobei der oder die walking-beam (12) in einem Zweierschritt bewegbar ist/sind.

12. Vorrichtung nach Anspruch 11, **dadurch gekennzeichnet,**
**dass** zum Kühlen der DVD-Substrate A und B nach ihrer Entnahme aus den Spritzaggregaten A und B (10, 11) eine Kühlstation, insbesondere vom Typ Spindelkühler (30, 31), vorgesehen ist, daß für den Transport der gekühlten Substrate A und B zu der Beschichtungseinrichtung (16) ein im Zweierschritt bewegbarer walking beam (12) vorgesehen ist, und dass Mittel (32) zum Umsetzen der Substrate A und B von der Kühlstation auf den zuvor genannten walking beam (12) in der Reihenfolge A-B-A-B-A-B vorgesehen sind.

13. Vorrichtung nach Anspruch 11 oder 12, **dadurch gekennzeichnet,**
**daß** an der Beschichtungsstation (16) Tandemgreifer (26, 27) zum gleichzeitigen Greifen je eines A-Substrats und eines B-Substrats vorgesehen sind.

14. Vorrichtung nach Anspruch 13, **dadurch gekennzeichnet,**
**daß** zwei einander gegenüberliegende Tandemgreifer (26, 27) vorgesehen sind, die dergestalt zusammenwirken, dass mit dem einen Tandemgreifer (26) ein Paar, bestehend aus einem A-Substrat und einem B-Substrat, von dem walking beam (12) entnommen und in die Beschichtungseinrichtung (16) eingelegt wird, vorzugsweise in einen mit zwei Sputterquellen ausgestatteten Kombisputter, und dass mit dem zweiten Tandemgreifer (27) das zuvor fertig beschichtete Paar von A-Substrat und B-Substrat entnommen und auf den zuvor freigewordenen Plätzen des walking beam (12) abgelegt wird (zwei in, zwei out).

15. Vorrichtung nach einem der Ansprüche 11 bis 14, **dadurch gekennzeichnet,**
**daß** in der Kleberauftragsstation (17) ein mitteis eines Walzensystems auftragbarer Hot-Melt-Kleber vorgesehen ist, daß für den Transport der DVD-Substrate zu der Kleberauftragsstation (17) ein im Zweierschritt bewegbarer walking beam (12) vorgesehen ist und daß die DVD-Substrate von dem zuvor genannten walking beam (12) in der ankommenden Reihenfolge A-B-A-B-A-B... auf ein durch das Walzensystem laufendes Transportband (18) übergebbar sind und in dieser Reihenfolge das Walzensystem durchlaufen können.

16. Vorrichtung nach Anspruch 15, **dadurch gekennzeichnet,**
**dass** der walk (2) und/oder der beam (1) bis über das Transportband (18) der Kleberauftragstation (17) reichend ausgebildet ist/sind.

17. Vorrichtung nach einem der Ansprüche 11 bis 13, **dadurch gekennzeichnet,**
**dass** ein oder mehrere Tandemgreifer (19) vorgesehen sind, mit denen die A-Scheibe und die B-Scheibe gleichzeitig und lagerichtig greif- und umsetzbar sind.

18. Vorrichtung nach einem der Ansprüche 11 bis 17, **dadurch gekennzeichnet,**
**dass** die Fügestation (20, 21) aus zwei zusammenklappbaren Hälften (22, 23) besteht, wobei die eine Hälfte zur Aufnahme der A-Scheibe und die andere Hälfte zur Aufnahme der B-Scheibe vorgesehen ist, und dass die Hälften in zusammengeklapptem Zustand eine evakuierbare Kammer bilden.

19. Vorrichtung nach Anspruch 18, **dadurch gekennzeichnet,**
**dass** für die Halterung der unteren Scheibe ein Kolben vorgesehen ist, wobei zum Verpressen der Substrate der Kolben mit Druck, insbesondere mit Druckluft, beaufschlagbar ist.

20. Vorrichtung nach einem der Ansprüche 11 bis 19, **dadurch gekennzeichnet,**
**dass** die Spritzaggregate A und B (10,11) zu beiden Seiten des ersten walking-beam (12) und in Transportrichtung derart zueinander versetzt angeordnet sind, dass die jeweiligen Substrate A und B unmittelbar an den ersten walking-beam (12) übergeben und in Transportrichtung hintereinander abgelegt werden können.

## Claims

1. Method for producing a DVD from two DVD substrates A and B, wherein the first substrate (A-disc) of the DVD is produced by a first injection unit A and the second substrate (B-disc) of the DVD is produced by a second injection unit B, wherein one or both DVD substrates are coated, in particular metallised, in a coating station wherein one or both DVD substrates are provided with an adhesive in an adhesive application station and wherein the DVD substrates A and B are supplied to at least one joining station for the purpose of joining the A-disc and B-disc to form a DVD, **characterised in that** at least one walking beam (12) is provided for transporting the DVD substrates A and B, **in that** the A-disc and the B-disc are alternately located behind one another in a row (A-B-A-B-A-B- ...) on the walking beam(s) (12), and **in that** the walking beam or beams is/are operated in double step fashion.

2. Method according to claim 1, **characterised in that** an A-disc and a B-disc are removed simultaneously from the walking beam (12) at the coating station (16), and **in that** after coating on the same or a further walking beam (12) the substrates A and B are deposited behind one another viewed in the transport direction.

3. Method according to claim 1 or 2, **characterised in that** two tandem grippers (26, 27) are provided at the coating station (16), **in that** a pair consisting of an A substrate and a B substrate is removed from the walking beam (12) by the first tandem gripper (26) and placed in a sputtering device, and **in that** the previously sputtered pair of A substrate and B substrate is removed by the second tandem gripper (27) and deposited on the previously vacated places of the walking beam (12) (two in, two out).

4. Method according to any one of claims 1 to 3, **characterised in that** a hot-melt adhesive which can be applied by means of a roller system is provided for bonding the DVD substrates (5), **in that** the substrates A and B are passed in the arrival sequence A-B-A-B-A-B... from the walking beam (12) onto a conveyor belt (18) running through the roller system and pass through the roller system in this sequence.

5. Method according to any one of claims 1 to 4, **characterised in that** the substrates A and B coated with adhesive are simultaneously grasped by a tandem gripper (19), simultaneously moved to a joining station (20, 21) and are simultaneously deposited there.

6. Method according to any one of claims 1 to 5, **characterised in that** the substrates A and B coated with adhesive are deposited in a joining station (20, 21) which consists of two folding halves (22, 23), wherein the A-disc is deposited in the one half and the B-disc is deposited in the other half, wherein depositing takes place simultaneously and wherein the two substrates A and B are joined after the halves are folded together.

7. Method according to claim 6, **characterised in that** after the halves of the joining station (20, 21) have been folded together, these form a chamber and this chamber is evacuated.

8. Method according to claim 6 or 7, **characterised in that** the lower disc rests on a piston which can be displaced in the chamber and the piston is subjected to pressure, in particular to compressed air, from below.

9. Method according to any one of claims 1 to 8, **characterised in that** the injection units A and B (10, 11) are arranged on either side of a first walking beam (12) and in the direction of transport are offset from one another in such a way that the respective substrates A and B are passed directly to the first walking beam (12) and can be simultaneously deposited behind one another in the direction of transport.

10. Method according to any one of claims 1 to 9, **characterised in that** the DVD substrates A and B are subjected to cooling air after their removal from the injection units A and B (10, 11), for example in a spindle cooler (30, 31), or during transportation on the first walking beam (12).

11. Device for producing a DVD, in particular for carrying out the method according to any one of claims 1 to 10, with two injection units A and B for producing the DVD substrates, wherein the first substrate (A-disc) of a DVD is produced by the first injection unit A and the second substrate (B-disc) is produced by the second injection unit B, with a coating device for coating, in particular for metallising the DVD substrates with an adhesive application station, with at least one joining station for joining A-disc and B-disc, and means for transporting the DVD substrates and the finished DVDs, **characterised in that** at least one walking beam (12) is provided for transporting the DVD substrates A and B, wherein the A-disc and the B-disc are alternately located behind one another in a row (A-B-A-B-A-B-...) on the walking beam(s) (12), and wherein the walking beam or beams (12) can be moved in double step fashion.

12. Device according to claim 11, **characterised in that** a cooling station, in particular of the spindle cooling type (30, 31) is provided for cooling the DVD substrates A and B after their removal from the injection units A and B (10, 11), **in that** a walking beam (12) which can be moved in double step fashion is provided for transporting the cooled substrates A and B to the coating device (16), and **in that** means (32) are provided for transferring the substrates A and B from the cooling station onto the above-mentioned walking beam (12) in the sequence A-B-A-B-A-B.

13. Device according to claim 11 or 12, **characterised in that** tandem grippers (26, 27) are provided at the coating station (16) for simultaneous grasping of an A substrate and a B substrate in each case.

14. Device according to claim 13, **characterised in that** two tandem grippers (26, 27) located opposite one another are provided which interact in such a way that a pair consisting of an A substrate and a B substrate is removed from the walking beam (12) by the one tandem gripper (26) and placed in the coating device (16), preferably in a combination sputtering device equipped with two sputtering sources, and **in that** the previously coated pair of A substrate and B substrate is removed by the second tandem gripper (27) and deposited on the previously vacated places on the walking beam (12) (two in, two out) .

15. Device according to any one of claims 11 to 14, **characterised in that** a hot-melt adhesive which can be applied by means of a roller system is provided in the adhesive application station (17), **in that** a walking beam (12) which can be moved in double step fashion is provided for transporting the DVD substrates to the adhesive application station (17), and **in that** the DVD substrates can be passed in the arrival sequence A-B-A-B-A-B... from the above-mentioned walking beam (12) onto a conveyor belt (18) running through the roller system and can pass through the roller system in this sequence.

16. Device according to claim 15, **characterised in that** the walk (2) or the beam (1) or both are designed so as to extend over the conveyor belt (18) of the adhesive application station (17).

17. Device according to any one of claims 11 to 13, **characterised in that** one or more tandem grippers (19) are provided with which the A-disc and the B-disc can simultaneously be grasped and transferred in the correct position.

18. Device according to any one of claims 11 to 17, **characterised in that** the joining station (20, 21) consists of two foldable halves (22, 23), wherein the one half is provided for receiving the A-disc and the other half for receiving the B-disc, and **in that** in the folded-together state, the halves form a chamber which can be evacuated.

19. Device according to claim 18, **characterised in that** a piston is provided for holding the lower disc, wherein the piston can be subjected to pressure, in particular compressed air, for pressing the substrate.

20. Device according to any one of claims 11 to 19, **characterised in that** the injection units A and B (10, 11) are arranged on either side of the first walking beam (12) and in the direction of transport are offset from one another in such a way that the respective substrates A and B are passed directly to the first walking beam (12) and can be deposited behind one another in the direction of transport.

## Revendications

1. Procédé pour la fabrication d'un DVD à partir de deux substrats de DVD A et B, moyennant quoi sont fabriqués le premier substrat (disque A) du DVD, avec le groupe de pulvérisation A, et le deuxième substrat (disque B) du DVD, avec le groupe de pulvérisation B, moyennant quoi, dans un poste de revêtement, un ou les deux substrat(s) de DVD est/sont couvert(s), en particulier par métallisation, moyennant quoi, dans un poste d'application de colle, un ou les deux substrat(s) de DVD est/sont enduit(s) de colle et moyennant quoi les substrats de DVD A et B sont amenés à au moins un poste de jointoyage pour assembler le disque A et le disque B en un DVD, **caractérisé en ce que** pour le transport des substrats de DVD A et B est/sont prévues un ou plusieurs longeron(s) mobile(s) (12), que le disque A et le disque B sont disposés alternativement l'un après l'autre dans une série sur le(s) longeron(s) mobile(s) (12) (A-B-A-B-A-B-...) et que le(s) longeron(s) mobile(s) est/sont exploité(s) dans une étape à deux temps.

2. Procédé selon la revendication 1, **caractérisé en ce que** sur le poste de revêtement (16) le longeron mobile (12) prend simultanément un disque A et un disque B, et que les substrats A et B sont déposés après le recouvrement sur le même ou un autre longeron mobile (12) l'un derrière l'autre dans le sens du transport.

3. Procédé selon la revendication 1 ou 2, **caractérisé en ce que** deux grappins en tandem (26, 27) sont prévus au poste de revêtement (16), que le premier grappin en tandem (26) prend une paire constituée d'un substrat A et d'un substrat B du longeron mobile (12) et insérée dans un dispositif de crépissage, et que le deuxième grappin en tandem (27) prend la paire de substrats A et B déjà crépie et la place sur les positions déjà libérées du longeron mobile (12) (deux en entrée, deux en sortie).

4. Procédé selon l'une quelconque des revendications 1 à 3, **caractérisé en ce que** pour le collage des substrats de DVD (5) est prévue une colle thermofusible applicable au moyen d'un système de laminage, que les substrats A et B sont remis, dans l'ordre d'arrivée A-B-A-B-A-B-..., à partir du longeron mobile (12) sur une des bandes transporteuses (18) tournant dans le système de laminage et parcourent le système de laminage dans ce même ordre.

5. Procédé selon l'une quelconque des revendications 1 à 4, **caractérisé en ce que** les substrats A et B enduits de colle sont saisis par un des grappins en tandem (19) simultanément, sont portés simultanément à un poste de jointoyage (20, 21) et sont posés là simultanément.

6. Procédé selon l'une quelconque des revendications 1 à 5, **caractérisé en ce que** les substrats A et B enduits de colle sont posés dans un poste de jointoyage (20, 21), qui consiste en deux moitiés rabattables l'une sur l'autre (22, 23), moyennant quoi le disque A est posé dans une des moitiés et le disque B dans l'autre moitié, moyennant quoi la pose se passe simultanément, et moyennant quoi l'assemblage des deux substrats A et B s'ensuit après le rabattement des moitiés.

7. Procédé selon la revendication 6, **caractérisé en ce qu'**après le rabattement des moitiés du poste de jointoyage (20, 21), celles-ci forment une chambre et cette chambre est évacuée.

8. Procédé selon la revendication 6 ou 7, **caractérisé en ce que** le disque inférieur repose dans la chambre sur un piston déplaçable et que le piston est percuté par en bas par la pression, en particulier par de l'air sous pression.

9. Procédé selon l'une quelconque des revendications 1 à 8, **caractérisé en ce que** les groupes de pulvérisation A et B (10, 11) sont disposés des deux côtés d'un premier longeron mobile (12) et sont décalés de la sorte l'un par rapport à l'autre dans le sens du transport, que les deux substrats A et B peuvent être remis directement sur le premier longeron mobile (12) et posés simultanément l'un derrière l'autre dans le sens du transport.

10. Procédé selon l'une quelconque des revendications 1 à 9, **caractérisé en ce que** les substrats de DVD A et B, après leur prise à partir des groupes de pulvérisation (10, 11), sont percutés par de l'air de refroidissement, par exemple dans un refroidisseur à broches (30, 31) ou pendant le transport sur le premier longeron mobile (12).

11. Dispositif pour fabriquer un DVD, en particulier pour l'exécution du procédé selon l'une quelconque des revendications 1 à 10, avec deux groupes de pulvérisation A et B pour la fabrication des substrats de DVD, moyennant quoi sont fabriqués le premier substrat (disque A) du DVD, avec le groupe de pulvérisation A, et le deuxième substrat (disque B) du DVD, avec le groupe de pulvérisation B, avec un dispositif de revêtement pour le recouvrement, en particulier par la métallisation des substrats de DVD, avec un poste d'application de colle, avec au moins un poste de jointoyage pour assembler le disque A et le disque B, ainsi qu'avec des moyens pour transporter les substrats de DVD et les DVD achevés, **caractérisé en ce qu'**un ou plusieurs longerons mobiles (12) sont prévus pour le transport des substrats de DVD A et B, moyennant quoi le disque A et le disque B se trouvent posés en alternance et l'un derrière l'autre sur le(s) longeron(s) mobile(s) (12) (A-B-A-B-A-B-...) et moyennant quoi le(s) longeron(s) mobile(s) (12) est/sont mobile(s) dans une étape à deux temps.

12. Dispositif selon la revendication 11, **caractérisé en ce qu'**il est prévu pour le refroidissement des substrats de DVD A et B après leur prise à partir des groupes de pulvérisation A et B (10, 11) un poste de refroidissement, en particulier du type refroidisseur à broches (30, 31), qu'il est prévu un longeron mobile (12) déplaçable dans une étape à deux temps pour le transport des substrats refroidis A et B vers le dispositif de revêtement (16), et que des moyens (32) sont prévus pour déplacer les substrats A et B du poste de refroidissement sur le longeron mobile (12) mentionné ci-dessus dans l'ordre A-B-A-B-A-B.

13. Dispositif selon la revendication 11 ou 12, **caractérisé en ce que** des grappins en tandem (26, 27) sont prévus sur le poste de revêtement (16) pour la prise simultanée du substrat A et du substrat B.

14. Dispositif selon la revendication 13, **caractérisé en ce que** sont prévus des grappins en tandem (26, 27) se faisant face l'un à l'autre et qui de telle façon coopèrent, qu'avec un grappin en tandem (26) est prise une paire, consistant en un substrat A et un substrat B, à partir du longeron mobile (12) et qu'elle est insérée dans le dispositif de revêtement (16), de préférence dans un dispositif de crépissage combiné équipé de deux sources de crépissage, et que le deuxième grappin en tandem (27) prend la paire de substrats A et B déjà recouverte et la place sur les positions déjà libérées du longeron mobile (12) (deux en entrée, deux en sortie).

15. Dispositif selon l'une quelconque des revendications 11 à 14, **caractérisé en ce qu'**il est prévu dans le poste d'application de colle (17) une colle thermofusible pouvant être enduite au moyen d'un système de laminage, qu'un longeron mobile (12) pouvant se déplacer dans une étape à deux temps est prévu pour le transport des substrats de DVD au poste d'application de colle (17) et que les substrats de DVD peuvent être livrés à partir du longeron mobile mentionné ci-dessus (12) dans l'ordre d'arrivée A-B-A-B-A-B... sur une bande transporteuse (18) tournant dans le système de laminage et parcourir dans le même ordre le système de laminage.

16. Dispositif selon la revendication 15, **caractérisé en ce que** le mouvement (2) et/ou le(s) longeron(s) mobile(s)(1) est/sont conçu(s) pour arriver au-delà de la bande transporteuse (18) du poste d'application de colle (17).

17. Dispositif selon l'une quelconque des revendications 11 à 13, **caractérisé en ce qu'**un ou plusieurs grappins en tandem (19) sont prévus, avec lesquels le disque A et le disque B peuvent être accrochés et posés simultanément dans le sens du logement.

18. Dispositif selon l'une quelconque des revendications 11 à 17, **caractérisé en ce que** le poste de jointoyage (20, 21) est constitué de deux moitiés rabattables (22, 23), moyennant quoi une moitié est prévue pour la réception du disque A et l'autre moitié pour celle du disque B, et que les moitiés constituent, lorsqu'elles sont rabattues, une chambre qui peut être évacuée.

19. Dispositif selon la revendication 18, **caractérisé en ce qu'**il est prévu un piston pour le soutien du disque inférieur, moyennant quoi le piston peut être appliqué pour presser les substrats avec une pression, en particulier celle de l'air sous pression.

20. Dispositif selon l'une quelconque des revendications 11 à 19, **caractérisé en ce que** les deux groupes de pulvérisation A et B (10, 11) sont disposés des deux côtés du premier longeron mobile (12) et en direction du transport de sorte à se trouver l'un contre l'autre, qu'il est possible de livrer chacun des substrats A et B immédiatement sur le longeron mobile (12) et les poser l'un derrière l'autre dans le sens du transport.
